# FASCICULE DE BREVET EUROPEEN

(11) **EP 0 530 073 B1**
(45) Date de publication et mention de la délivrance du brevet: **14.09.1994**
(21) Numéro de dépôt: 92402263.5
(22) Date de dépôt: 11.08.1992
(51) Int. Cl.: G01S 13/82, G01S 7/02, G06K 7/10

(54) **Système d'échanges de données par hyperfréquences, à émission et réception simultanées**
System zum Datenaustausch mittels Mikrowellen mit gleichzeitigem Senden und Empfangen
System for data exchange using microwaves, with simultaneous transmission and reception

(30) Priorité: 23.08.1991 FR 9110570
(43) Date de publication de la demande: 03.03.1993
(73) Titulaire: THOMSON-CSF SEMICONDUCTEURS SPECIFIQUES, 92800 Puteaux (FR)
(72) Inventeur: Camiade, Marc, F-92045 Paris la Défense (FR); Serru, Véronique, F-92045 Paris la Défense (FR); Geffroy, Dominique, F-92045 Paris la Défense (FR)
(74) Mandataire: Taboureau, James

(56) Documents cités:
- EP-A- 0 346 922
- WO-A-88/01062
- WO-A-90/10200
- WO-A-90/10200
- FR-A- 2 257 095
- GB-A- 2 219 175
- PATENT ABSTRACTS OF JAPAN vol. 3, no. 143 (E-154)27 Novembre 1979 & JP-A-54 121 693 ( OKI DENKI ) 20 Septembre 1979

## Description

La présente invention concerne un système de transmission de données par modulation-démodulation d'une onde hyperfréquence, pour communication bidirectionnelle entre une station fixe, dite balise ou lecteur, et une station mobile, dite badge ou répondeur. Plus précisément, l'invention concerne l'architecture du système, organisée de façon à permettre les échanges de données en simultané, et non plus en alternance, entre une balise et au moins un badge. Le domaine des hyperfréquences permet à la balise d'interroger un grand nombre de badges, sans collisions entre les trains d'informations échangées.

Ce type d'échange de données trouve ses applications dans le contrôle des mobiles, tel qu'identification de wagons sur une voie, d'automobiles à un péage ou de piétons à une entrée d'immeuble : dans ces cas, les badges mobiles défilent devant le lecteur fixe. Néanmoins dans certains cas de recherche, il se peut que les badges soient fixes, liés à un objet recherché, et que le lecteur défile jusqu'à ce qu'il ait trouvé l'objet recherché : par convention et pour rendre plus clair l'exposé de l'invention, on conservera les dénominations de "lecteur" et "badge répondeur" ou "transpondeur" même si le lecteur devient mobile et le badge devient fixe.

Les systèmes connus d'échange de données par hyperfréquences utilisant des badges du type carte de crédit fonctionnent en alternance, car ils ont été conçus pour être les plus simples possibles, pour une utilisation "grand public", avec entre autres une seule antenne dans le badge.

Le schéma d'ensemble d'un système d'échange de données par hyperfréquence, selon l'art connu, est assez simple, et est décrit dans les Demandes de Brevets français publiés n^{o} 26 69475, -479, -481 et -484 déposées le 16 Novembre 1990 par la Demanderesse.

Une station mobile ou badge comprend une partie hyperfréquence, une partie traitement de l'information et une alimentation. Les échanges entre ces deux parties concernent la modulation-démodulation et les commandes émission/réception.

Une station fixe ou balise comprend une source hyperfréquence, une partie hyperfréquence une partie de traitement de l'information, et un calculateur qui permet de gérer l'ensemble des échanges radioélectriques effectués avec les badges par l'intermédiaire des antennes de badge et de balise ou lecteur.

Les Demandes de Brevets citées sont essentiellement orientées vers une optimisation de l'énergie dans le badge et décrivent différentes solutions d'organisation et de fonctionnement du modem (modulateur-démodulateur) du badge, en vue d'économiser l'énergie dans le badge. En effet, un badge se présente comme une carte à puce, et il doit être extrêmement économe en énergie, car il est alimenté par de petites piles dites "boutons" ou par des cellules photovoltaïques au silicium amorphe, ou encore par l'énergie transportée par une onde hyperfréquence.

En outre, pour des raisons économiques et de simplicité des fabrications, les deux extrémités du système, c'est-à-dire balise et badge, peuvent fonctionner avec chacune une seule antenne.

En fait, une antenne hyperfréquence imprimée sur le substrat du badge est très simple, peu encombrante et peu chère : c'est un carré d'approximativement 2 cm de côté ( selon la fréquence). Il est donc très peu pénalisant en surface occupée pour un badge d'y prévoir deux antennes l'une pour l'émission et l'autre pour la réception, et il n'est pas du tout pénalisant pour la balise de la concevoir également avec deux antennes car toutes les difficultés dans un système d'échange de données sont liées aux badges : encombrement et consommation.

D'ailleurs, plusieurs documents publiés décrivent des systèmes d'échanges de données par hyperfréquences dans lesquels au moins l'une des deux extrêmités comporte deux antennes, qui sont polarisées de façons différentes croisées pour une polarisation rectiligne ou inversées pour une polarisation circulaire. C'est le cas par exemple de EP-A- 346 922, de WO-A-90/10200 ou de FR-A-2 257 095. Mais dans tous les cas, les échanges de données se font en alternat, c'est à dire que la réponse, ou lecture, se fait après l'interrogation, ou écriture, et l'utilisation de polarisations différentes sur les antennes a pour objet d'éviter des réflexions parasites , mais pas de permettre un échange de données en simultané, connu sous le nom de "full duplex", qui suppose une structure telle que deux antennes dans la voie d'écriture et deux antennes dans la voie de lecture sont actives simultanément.

Selon l'invention, les deux types de stations d'un système d'échange de données par hyperfréquences, c'est-à-dire la balise et les badges, comportent, chacun, deux canaux en parallèle munis chacun d'une antenne, un premier canal étant réservé à l'émission et un second canal réservé à la réception, ce qui permet les échanges simultanés. Ce qui distingue ce système, outre sa structure liée aux fréquences porteuses - 10 à 20 GHz - réside dans la polarisation des antennes : les deux antennes d'une même station sont à polarisations croisées et les deux antennes qui communiquent - une pour la balise, une pour un badge - sont de même polarisation ou de polarisations compatibles. Par ce système de polarisations croisées le découplage entre deux canaux qui travaillent simultanément est maximal : de 20 à 40 dB selon les réalisations d'antennes.

De façon plus précise, l'invention concerne un système d'échanges de données par ondes hyperfréquences entre une première station dite balise et au moins une seconde station dite badge, munies chacune de deux antennes, caractérise en ce que ce système fonctione en écriture et en lecture simultanées et en ce qu'il comporte :
- une voie d'écriture, par la balise, de données dans le badge, comprenant une première antenne d'émission de la balise et une première antenne de réception du badge, ces deux premières antennes étant à polarisations de types compatibles,
- une voie de lecture par la balise, de données inscrites dans le badge, comprenant une seconde antenne d'émission-réception de la balise et une seconde antenne d'émission-réception du badge, ces deux secondes antennes étant à polarisations de types compatibles, les polarisations des premières antennes (6, 13) étant rectilignes croisées ou circulaires de sens inverse par rapport aux polarisations respectives des secondes antennes (11, 15)

L'invention sera mieux comprise par la description suivante d'un exemple de réalisation, appuyée sur les figures jointes en annexe qui représentent :
- figure 1 : schéma électrique fonctionnel d'un système selon l'invention ;
- figure 2 : diagramme de fréquences dans le cas d'utilisation d'une seule sous-porteuse ;
- figure 3 : diagramme de fréquences, avec deux sous-porteuses ;
- figures 4 à 7 : exemples de polarisations croisées possibles.

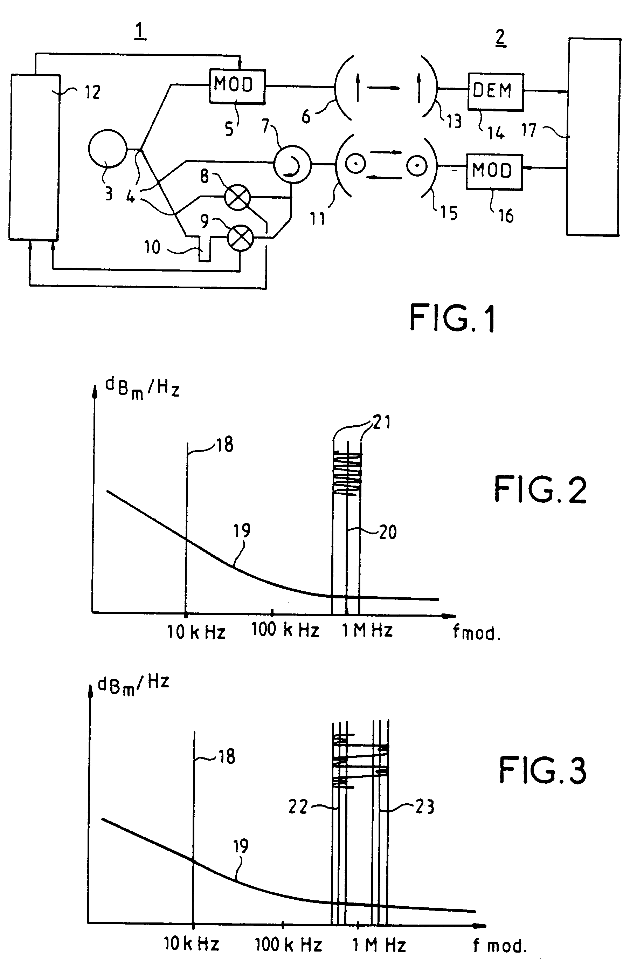

La figure 1 donne le schéma fonctionnel de ce système, représenté dans sa forme minimale : une balise ou lecteur 1, et au moins un badge ou répondeur ou transpondeur 2.

La balise 1 comprend au moins :
- une source 3 oscillateur hyperfréquence,
- des diviseurs de puissance 4, de type Wilkinson ou coupleurs, pour alimenter les voies émission et réception,
- un circuit 5 de modulation de la porteuse hyperfréquence, relié à une première antenne d'émission 6,
- un circuit de réception, comportant un circulateur 7, et deux mélangeurs 8 et 9 en quadrature par la ligne à retard 10, ce circuit étant relié à une deuxième antenne de réception 11.

Les deux antennes 6 et 11 de la balise sont polarisées mais de deux types de polarisations différentes, par exemple l'une en polarisation circulaire droite et l'autre en circulaire gauche ou encore l'une en rectiligne "verticale" et l'autre en rectiligne horizontale ; c'est ce cas qui est représenté sur la figure 1.

L'avantage des polarisations croisées entre les deux antennes est que le découplage obtenu, de 20 à 40 dB suivant les réalisations, permet l'émission et la réception simultanée, sans diaphonie entre les voies.

La balise comprend enfin un ensemble 12 de traitement de l'information, alimentations liaisons avec l'extérieur, qui gère les émissions et réceptions de la balise.

Le badge 2 comprend au moins :
- une première antenne 13 de réception, reliée à un circuit 14 de démodulation de l'onde hyperfréquence émise par l'antenne 6 de la balise 1,
- une deuxième antenne 15 d'émission, reliée à un circuit 16 de modulation d'une porteuse hyperfréquence,
- une unité de traitement du signal 17, reliée aux deux circuits du modem 14 + 16. Cette unité de traitement fournit l'alimentation des circuits, la gestion des circuits et des mémoires d'identification, lorsque la balise lui envoie un signal d'interrogation.

Comme dans la balise 1, les antennes 13 et 15 du badge 2 sont à polarisations croisées, de façon à obtenir le maximum de découplage entre elles, mais leurs polarisations respectives sont choisies pour permettre la compatibilité entre les antennes de la balise et celles du badge qui communiquent entre elles. On reviendra ultérieurement sur les types de polarisations compatibles.

Les schémas électriques des différents composants de la balise et du badge ne sont pas détaillés ici : ils sont connus et disponibles sur le marché, ou bien décrits dans les Demandes de Brevets citées précédemment.

L'exposé du fonctionnement du système permettra de mieux comprendre son architecture.

En mode écriture, ou interrogation, l'échange de données s'effectue sur un premier groupe d'antennes de types compatibles en polarisation. L'unité de traitement 12 de la balise commande le modulateur 5 de la voie d'émission, et la première antenne 6 transmet l'information à la fréquence porteuse. Le badge reçoit cette information par sa première antenne 13, la démodule par le circuit 14 et la transmet à son unité de traitement de l'information 17.

En mode lecture, ou réponse, l'échange de données s'effectue sur un second groupe d'antennes de types compatibles, différent du premier groupe. La balise émet par sa voie réception et sa seconde antenne 11 une porteuse hyperfréquence non modulée. Le badge la reçoit par sa seconde antenne 15, la module par le modulateur 16 pour la charger d'une information ou réponse, et la réémet par la même antenne 15. La balise effectue la démodulation par le récepteur homodyne 7 à 10 couplé à sa voie de réception.

La modulation par le badge peut se faire de différentes façons, mais la variation du coefficient de réflexion de la seconde antenne 15 s'avère être un procédé de choix, compte tenu des spécificités du système, et notamment de l'alimentation en énergie d'un badge de format "carte de crédit".

Les deux modes de fonctionnement en écriture et en lecture étant découplés par la polarisation croisée des deux groupes d'antennes, le système peut fonctionner en duplex, en émissions et réceptions simultanées sur les deux voies.

Le schéma de modulation global peut avantageusement être choisi de façon que le découplage entre les voies émission et réception (20 à 40 dB) soit compatible avec le fonctionnement. On peut par exemple utiliser des fréquences de modulation très différentes pour l'écriture et pour la lecture.

Les figures 2 et 3 en donnent deux exemples, les fréquences de modulation étant portées en abscisses, et la puissance en ordonnées.

En mode écriture, on utilise une modulation d'amplitude. Dans ce sens de la liaison, il n'y a pas de problème de bruit lié à la modulation d'amplitude car les niveaux reçus par le badge sont de l'ordre de -30 dBm : on peut alors moduler directement à la fréquence du débit de transmission, soit quelques dizaines de kilohertz (droite 18 sur les figures 2 et 3). Il est préférable d'utiliser un modulateur 5 quasi-sinusoïdal pour éviter de générer des harmoniques du signal de modulation.

En mode lecture, on peut moduler en amplitude ou en phase la porteuse hyperfréquence. Cependant, il existe deux raisons fondamentales pour utiliser une sous-porteuse.

La première raison est qu'il est indispensable de travailler à des fréquences de modulation très différentes par rapport à celles utilisées pour l'écriture de façon à pouvoir filtrer les fuites issues de la voie d'écriture.

La seconde raison réside dans l'intérêt qu'il y a à dimininuer le bruit, proportionnel à 1/f, des composants hyperfréquences du système. Aux fréquences utilisées, quelques gigahertz à quelques dizaines de gigahertz, les composants employés sont des transistors en GaAs, plus bruyants que ceux en Si, leur courbe de bruit est représentée en 19 sur les figures 2 et 3. Pour une puissance à détecter de l'ordre de -80 dBm, la fréquence de la sous-porteuse de modulation s'exprime en mégahertz, car le bruit en 1/f y est moindre.

Il y a plusieurs façons d'utiliser une sous-porteuse. La première façon est illustrée en figure 2, et la sous-porteuse 20, de fréquence voisine de 1 MHz, a deux bandes latérales 21 : la modulation est obtenue en tout ou rien entre les deux bandes latérales, au rythme de la modulation. La réception dans le badge se fait au moyen d'un détecteur quadratique.

La seconde façon, illustrée en figure 2, consiste à utiliser deux sous-porteuses 22 et 23 de fréquences voisines par exemple 1 et 1,2 MHz, et à les commuter au rythme de la modulation. Il s'agit alors d'une modulation dite "pseudo FSK" (Frequency Shift Keying). La détection se fait au moyen d'un oscillateur verrouillé en phase et synchronisé avec les sous-porteuses. Un troisième possibilité consiste à moduler une sous porteuse en BPSK (Bi Phase Shift Keying) c'est à dire en effectuant des sauts de phase au rythme de la modulation.

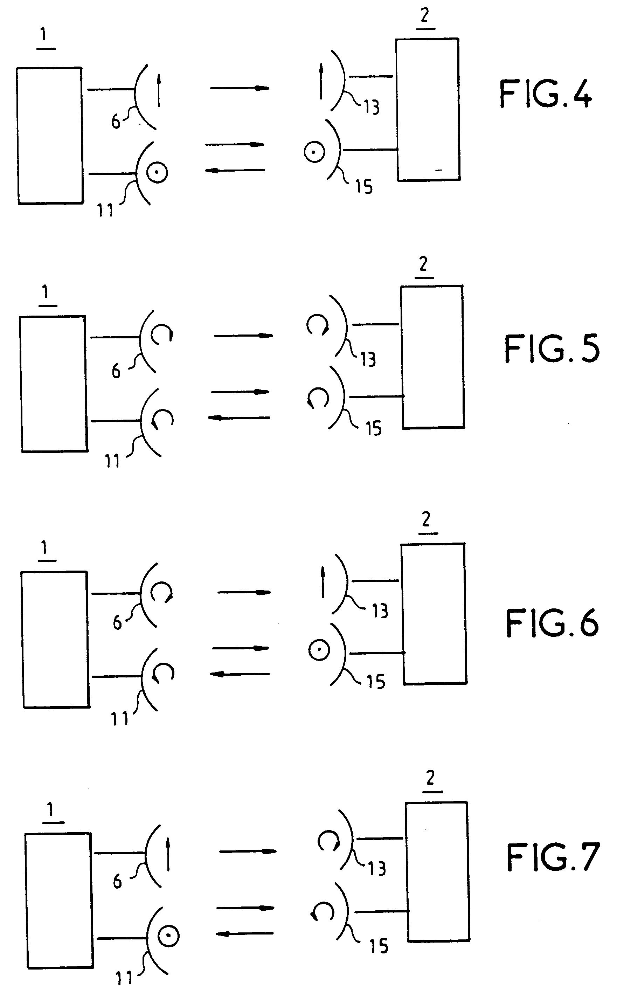

Les figures 4 à 7 illustrent quelques possibilités offertes pour réaliser le découplage des voies d'émission et de réception. Les signes conventionnels pour représenter une polarisation sont utilisés sur ces figures.

On peut utiliser :
- des antennes à polarisations rectilignes croisées sur la balise et sur le badge (figure 4),
- des antennes à polarisations circulaires croisées, ou inversées, sur la balise et sur le badge (figure 5),
- des antennes à polarisations circulaires inversées sur la balise et à polarisations rectilignes croisées sur le badge (figure 6),
- des antennes à polarisations rectilignes croisées sur la balise et à polarisations circulaires inversées sur le badge (figure 7).

Ces combinaisons représentées ne sont pas limitatives : elles sont au moins doublées par permutation entre les voies émission (premier groupe d'antennes 6 + 13) et réception (second groupe d'antennes 11 + 15), et en outre, selon les cas, par permutations croisées entre groupes. Par exemple, en figure 7, l'antenne 6 communique avec une antenne 13 à polarisation droite mais pourrait également communiquer avec une antenne à polarisation gauche.

Dans les cas où les polarisations circulaires et rectilignes collaborent, on obtient un fonctionnement correct du système quelle que soit la position du badge en rotation autour de l'axe balise-badge.

De même que pour les circuits, la façon de polariser une antenne n'est pas détaillée ici, car cela est bien connu, et différents types d'antennes polarisées peuvent être utilisées aux fins de réaliser un système dont les antennes polarisées permettent l'émission et la réception simultanées.

## Revendications

1. Système d'échanges de données par ondes hyperfréquences entre une première station dite balise (1) et au moins une seconde station dite badge (2), munies chacune de deux antennes (6, 11) (13, 15), caractérisé en ce que ce système fonctionne en écriture et en lecture simultanées, et en ce qu'il comporte :
- une voie d'écriture, par la balise (1) de données dans le badge (2) comprenant une première antenne d'émission (6) de la balise (1) et une première antenne (13) de réception du badge (2), ces deux premières antennes (6,13) étant à polarisations de types compatibles,
- une voie de lecture, par la balise (1), de donnees inscrites dans le badge (2), comprenant une seconde antenne d'émission-réception (11) de la balise (1) et une seconde antenne d'émission-réception (15) du badge (2), ces deux secondes antennes (11,15) étant à polarisations de types compatibles, les polarisations des premières antennes (6,13) étant rectilignes croisées ou circulaires de sens inverse par rapport aux polarisations respectives des secondes antennes (11,15)

2. Système selon la revendication 1, caractérisé en ce que les premières antennes (6,13) sont à polarisation rectiligne, et les secondes antennes (11,15) sont à polarisation rectiligne croisée avec celle des premières antennes.

3. Système selon la revendication 1, caractérisé en ce que les premières antennes (6,13), sont à polarisation circulaire, et les secondes antennes (11,15) sont à polarisation circulaire d'un sens inversé par rapport à celle de premières antennes.

4. Système selon la revendication 1, caractérisé en ce que les antennes de la balise (1) sont à polarisations rectilignes croisées et les antennes du badge (2) sont à polarisations circulaires inversées.

5. Système selon la revendication 1, caractérisé en ce que les antennes de la balise (1) sont à polarisations circulaires inversées et les antennes du badge (2) sont à polarisations rectilignes croisées.

## Claims

1. System for exchanging data by microwaves between a first so-called beacon station (1) and at least one second so-called tag station (2), each furnished with two antennae (6, 11) (13, 15), characterized in that this system operates in write and read mode simultaneously, and in that it includes:
- a path for writing, via the beacon (1), data to the tag (2), comprising a first transmitting antenna (6) for the beacon (1) and a first receiving antenna (13) for the tag (2), these two first antennae (6, 13) having compatible types of polarization,
- a path for reading, via the beacon (1), data registered in the tag (2), comprising a second transmitting/receiving antenna (11) for the beacon (1) and a second transmitting/receiving antenna (15) for the tag (2), these two second antennae (11, 15) having compatible types of polarization, the polarizations of the first antennae (6, 13) being cross linear or reverse circular relative to the respective polarizations of the second antennae (11, 15).

2. System according to Claim 1, characterized in that the first antennae (6, 13) have linear polarization and the second antennae (11, 15) have cross linear polarization with respect to that of the first antennae.

3. System according to Claim 1, characterized in that the first antennae (6, 13) have circular polarization and the second antennae (11, 15) have reverse circular polarization relative to that of the first antennae.

4. System according to Claim 1, characterized in that the antennae of the beacon (1) have cross linear polarizations and the antennae of the tag (2) have reverse circular polarizations.

5. System according to Claim 1, characterized in that the antennae of the beacon (1) have reverse circular polarizations and the antennae of the tag (2) have cross linear polarizations.

## Patentansprüche

1. System zum Datenaustausch mittels Hochfrequenzwellen zwischen einer ersten Station (1), Funkfeuer genannt, und mindestens einer zweiten Station (2), Marke genannt, die je zwei Antennen (6, 11; 13, 15) besitzen, dadurch gekennzeichnet, daß das System gleichzeitigen Schreib- und Lesebetrieb erlaubt und daß es aufweist:
- einen Schreibkanal zum Einschreiben von Daten durch das Funkfeuer (1) in der Marke (2), mit einer ersten Sendeantenne (6) des Funkfeuers und einer ersten Empfangsantenne (13) der Marke (2), wobei diese beiden Antennen (6, 13) miteinander kompatible Polarisationen besitzen,
- einen Lesekanal zum Lesen von in der Marke (2) eingetragenen Daten durch das Funkfeuer (1), mit einer zweiten Sende-Empfangsantenne (11) im Funkfeuer und einer zweiten Sende-Empfangsantenne (15) in der Marke (2), wobei diese beiden Antenne (11, 15) miteinander kompatible Polarisationstypen besitzen und wobei die Polarisationen der ersten Antennen (6, 13) im Vergleich zu den entsprechenden Polarisationen der zweiten Antennen (11, 15) geradlinig gekreuzt oder zirkular entgegengerichtet sind.

2. System nach Anspruch 1, dadurch gekennzeichnet, daß die ersten Antennen (6, 13) eine geradlinige Polarisation besitzen und daß die zweiten Antennen (11, 15) eine geradlinige Polarisation besitzen, die zu der ersten Antennen gekreuzt ist.

3. System nach Anspruch 1, dadurch gekennzeichnet, daß die ersten Antennen (6, 13) eine Zirkularpolarisation besitzen und daß die zweiten Antennen (11, 15) eine Zirkularpolarisation in entgegengesetzter Richtung im Vergleich zu den ersten Antennen besitzen.

4. System nach Anspruch 1, dadurch gekennzeichnet, daß die Antennen des Funkfeuers (1) geradlinig gekreuzte Polarisationen besitzen und die Antennen der Marke (2) zirkular entgegengesetzt gerichtete Polarisationen besitzen.

5. System nach Anspruch 1, dadurch gekennzeichnet, daß die Antennen des Funkfeuers zirkulare entgegengesetzte Polarisationen und die Antennen der Marke (2) geradlinige gekreuzte Polarisationen aufweisen.
